# EUROPEAN PATENT APPLICATION

(11) **EP 4 252 535 A1**
(43) Date of publication of application: **04.10.2023**
(21) Application number: 23164288.5
(22) Date of filing: 27.03.2023
(51) Int. Cl.: A01M 7/00

(54) **LIQUID DISTRIBUTION SYSTEMS FOR CROP SPRAYERS COMPRISING A WATER QUALITY SENSOR, AND RELATED METHODS**

(30) Priority: 28.03.2022 US 202263362015 P
(71) Applicant: Agco Corporation, Duluth, Georgia 30096 (US)
(72) Inventor: BAK, Justin Thomas, Hesston, 67062-0969 (US); SNYDER, Todd Brandon, Hesston, 67062-0969 (US)
(74) Representative: AGCO Intellectual Property Department

(57) **Abstract**

A liquid distribution system (202) for a crop sprayer (102, FIG. 1) includes a product tank (110) configured to contain a liquid, a pump (302), and nozzles (204) carried by a boom. (112, FIG. 1) The product tank has a fluid inlet (306), and at least one water quality sensor (314) is configured to detect a water quality property of liquid entering the product tank through the fluid inlet. Methods of operating a crop sprayer (102, FIG. 1) include measuring a first water quality property of fresh water entering a product tank, measuring a second water quality property of rinsate formed from the fresh water within the product tank, removing the rinsate from the product tank, and if a difference between the second water quality property and the first water quality property is greater than a preselected threshold, forming a second rinsate in the product tank.

## Description

### FIELD

Embodiments of the present disclosure relate to mobile application machines, such as self-propelled sprayers and similar vehicles. More particularly, embodiments relate to liquid distribution systems for applying chemicals.

### BACKGROUND

High crop yields of modern agribusiness typically require application of fertilizers, pesticides, fungicides, and/or herbicides. Dispersing these chemicals onto highacreage fields requires specialized machines mounted on or towed by a vehicle. An example of such a machine is the self-propelled sprayer.

A common design for a self-propelled crop sprayer includes a chassis with a tank, boom arms, and nozzles connected to the boom arms. The tank contains liquid product such as fertilizers, pesticides, fungicides, and/or herbicides. Boom arms extend outward from the sides of the chassis. Boom plumbing contains supply lines and nozzles spaced apart along the length of the boom arms at a spacing distance corresponding to the spray pattern of the nozzles. In operation, as the crop sprayer crosses the field, liquid is pumped from the tank through the supply lines along the boom arms, and out through the nozzles. This allows the self-propelled sprayer to distribute the liquid along a relatively wide path. The length of conventional boom arms may vary from, for example, 6 meters (18 feet) up to 46 meters (150 feet), but shorter or longer booms are possible. The boom arms typically swing in for on-road transport and out for field-spraying operations.

Conventionally, the nozzles are connected in series such that the product flows through a pipe and/or hose from one nozzle to another. Booms have been of the "wet boom" type, where the boom comprises a frame member with a pipe mounted thereon, where the liquid passes through the pipe into nozzles mounted on the pipe and liquidly connected thereto, or a "dry boom" type, where the nozzles are mounted to the frame member and liquid passes to the nozzles through a hose which is connected between the nozzles. The nozzles are attached to the pipe or frame with brackets at desired intervals along the boom arm.

When a sprayer is first used to dispense a particular product, the product may be flushed through the pipe or hose to each nozzle to fill entire plumbing system with the product. This may help to remove air bubbles and ensure that any prior products are purged from the system. To avoid uneven distribution of the product, this flushing and purging process may be performed before the sprayer enters the planted area of the field. This process may dispense several gallons of product out of the boom to ensure that all of the air is out of the boom and that liquid product can consistently and evenly be dispensed from each of the nozzles.

### BRIEF SUMMARY

In some embodiments, a liquid distribution system for a crop sprayer includes a product tank configured to contain a liquid, a pump in fluid communication with the product tank, and a plurality of nozzles carried by a boom and configured to receive the liquid from the pump through at least one plumbing line. The product tank has a fluid inlet, and at least one water quality sensor is configured to detect a water quality property of liquid entering the product tank through the fluid inlet.

The at least one water quality sensor can include, for example, a pH sensor, a turbidity sensor, a dissolved oxygen sensor, a salinity sensor, an ammonia sensor, a chlorine sensor, a nitrate sensor, a sulfite sensor, a total organic carbon sensor, and/or a sensor for detecting any other element or ion, without limitation.

The at least one water quality sensor may be disposed within the product tank, and may be disposed to measure the water quality property of the liquid in the product tank. The at least one water quality sensor may be configured to report the water quality property to an operator of the crop sprayer.

In certain embodiments, the crop sprayer may also include a rinse tank configured to contain rinse water separate from the liquid in the product tank. In these embodiments, the water quality sensor is configured measure the water quality property of the rinse water entering the product tank through the fluid inlet.

The liquid distribution system may optionally include a mixing device within the product tank, and the sensor may be configured to detect the water quality property of liquid passing through the mixing device.

Methods of operating a crop sprayer include providing fresh water to a product tank of the crop sprayer, measuring a first water quality property of the fresh water entering the product tank, circulating the fresh water within the product tank to form a rinsate, measuring a second water quality property of the rinsate in the product tank, comparing the second water quality property to the first water quality property, removing the rinsate from the product tank, and if a difference between the second water quality property and the first water quality property is greater than a preselected threshold, providing additional fresh water to the product tank to form a second rinsate.

The product tank may optionally be drained before providing fresh water to the product tank.

Measuring the first and second water quality properties may include measuring the water quality properties of fresh water or the rinsate passing a sensor within the product tank. Both water quality properties (i.e., the first water quality property of the fresh water and the second water quality property of the rinsate) may be measured by a single sensor. The water quality properties may include, without limitation, pH, turbidity, dissolved oxygen, salinity, ammonia concentration, chloride concentration, nitrate concentration, sulfite concentration, total organic carbon, and/or any other element or ion concentration.

In some embodiments, removing the rinsate from the product tank may include spraying at least a portion of the rinsate through nozzles carried by a boom of the crop sprayer.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 illustrates an agricultural vehicle in the form of a self-propelled crop sprayer;
FIG. 2 illustrates a portion of the agricultural vehicle of FIG. 1 including a boom and part of an application system;
FIG. 3A is a simplified schematic showing flow of fluid in the agricultural vehicle of FIG. 1;
FIG. 3B is a simplified schematic showing recirculation of fluid in the agricultural vehicle of FIG. 1;
FIG. 4 is a simplified schematic showing flow of fluid in another the agricultural vehicle; and
FIG. 5 is a simplified top view of another agricultural vehicle, in the form of a crop sprayer towed by a tractor.

### DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used throughout, ranges are used as shorthand for describing each and every value that is within the range. Any value within the range can be selected as the terminus of the range.

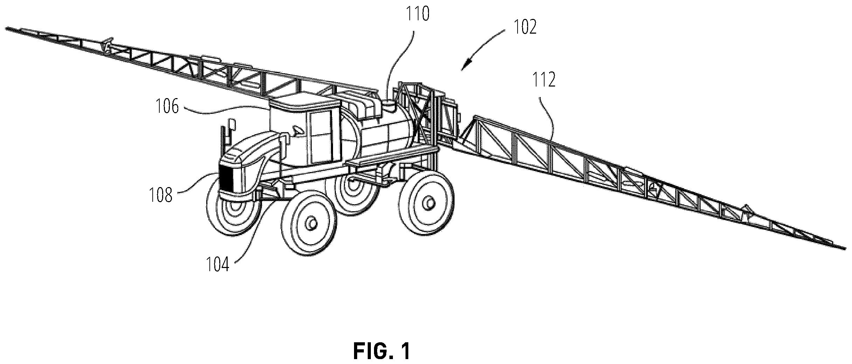

FIG. 1 shows a crop sprayer 102 used to deliver chemicals to agricultural crops in a field. The crop sprayer 102 includes a chassis 104 and an operator cab 106 mounted on the chassis 104. The operator cab 106 may house controls for the crop sprayer 102. An engine 108 may be mounted on a forward portion of the chassis 104 in front of operator cab 106 or may be mounted on a rearward portion of the chassis 104 behind the operator cab 106. The engine 108 may be commercially available from a variety of sources and may include, for example, a diesel engine or a gasoline powered internal combustion engine, a battery-powered electric motor, *etc.* The engine 108 provides energy to propel the crop sprayer 102 through a field on wheels or tracks, and may also provide energy to spray liquids from the crop sprayer 102.

The crop sprayer 102 further includes a product tank 110 to store a liquid to be sprayed on the field. The liquid may include chemicals, such as but not limited to, herbicides, pesticides, fungicides, and/or fertilizers. The product tank 110 may be mounted on the chassis 104, either in front of or behind the operator cab 106. The crop sprayer 102 may include more than one product tank 110 to store different chemicals to be sprayed on the field. The stored chemicals may be dispersed by the crop sprayer 102 one at a time, or different chemicals may be mixed and dispersed together in a variety of mixtures.

A boom 112 on the crop sprayer 102 is used to distribute the liquid from the product tank 110 over a wide swath as the crop sprayer 102 is driven through the field. The boom 112 may include two or more portions that can fold for transport on public roadways, and unfold (i.e., to the position shown in FIG. 1) for field operations.

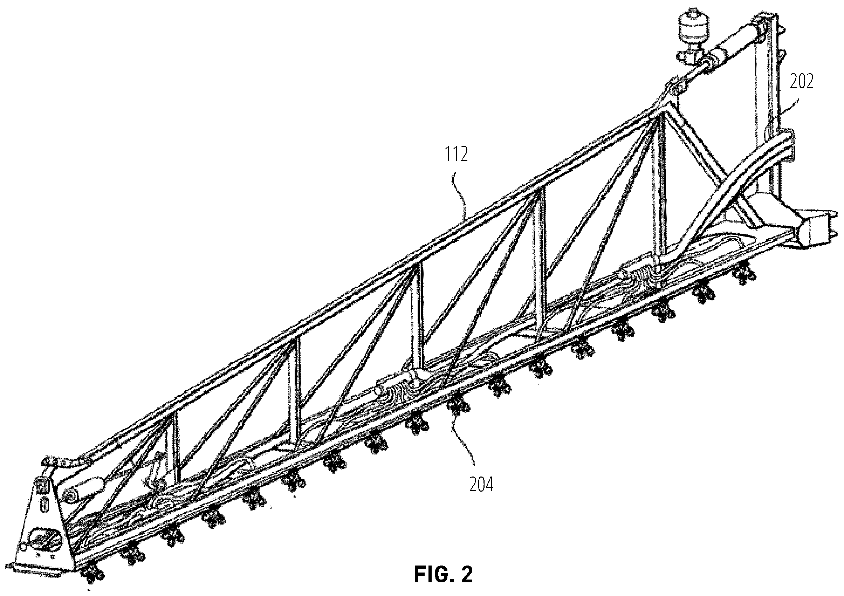

FIG. 2 is a simplified perspective view of a portion of the boom 112. Liquid is conveyed from the product tank 110 (FIG. 1) by a liquid distribution system 202 to various nozzles 204 carried by and spaced along the boom 112. The liquid distribution system 202, which may be mounted on the boom 112, includes at least one supply line and, optionally, a recirculation line connected to the product tank 110. Recirculation of liquid to the product tank 110 may be useful for purging lines when changing products without wasting product onto the ground or damaging crops with excess product. In some embodiments, the recirculation line may be omitted, and the liquid distribution system 202 can be purged at a shop or mixing plant, where liquid can be captured, such as on a catch pad.

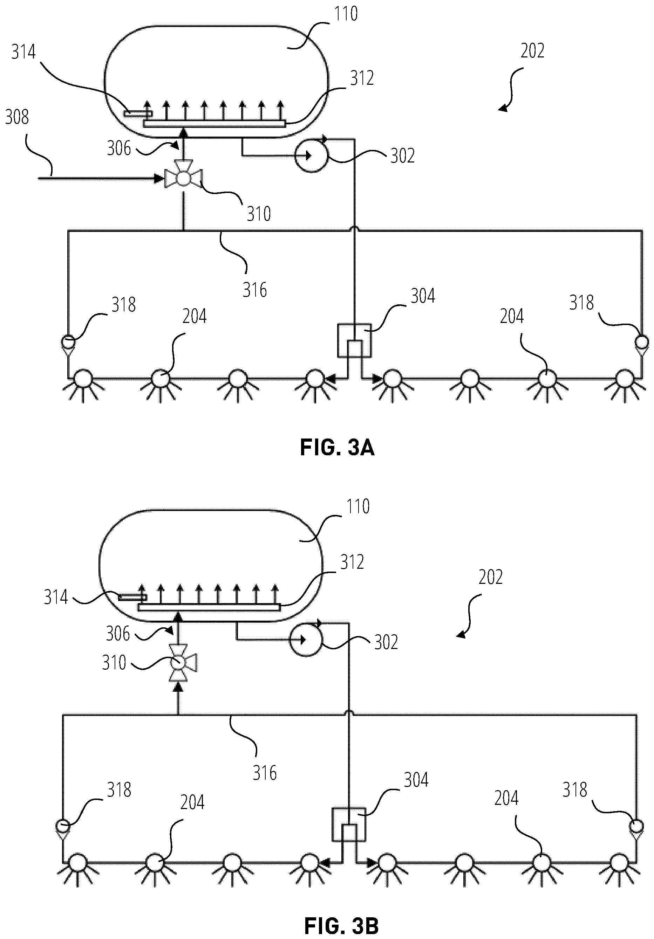

FIG. 3A is a simplified schematic view of the liquid distribution system 202 of the crop sprayer 102 shown in FIG. 1 and FIG. 2. As shown, a pump 302 is in fluid communication with the product tank 110. The nozzles 204 are configured to receive liquid from the product tank 110 via the pump 302, and optionally, a flow splitter 304 (e.g., to split flow into two or more portions to supply different sections of the boom 112). The product tank 110 can be filled through a fluid inlet 306 by fresh water 308 from an external source (e.g., a well, a pond, a canal, a municipal supply, etc.) or from a rinse tank. The fresh water 308 flows into the product tank 110 via a valve 310. A mixing device 312, such as a nozzle or sparge tube, may distribute the fresh water 308 entering the product tank 110 and encourage mixing with the liquid already in the product tank 110. The fresh water 308 passes a water quality sensor 314 as it enters the product tank 110, which sensor 314 is configured to detect one or more water quality property of the fresh water 308. The liquid in the product tank 110 may be mixed continuously, not just when filling with fresh water 308, by passing the liquid in the product tank 110 through the mixing device 312. The sensor 314 may be placed within the flow path of the mixing device 312 in the product tank 110, such that any time liquid is circulating in the product tank 110, a flow of liquid passes the sensor 314.

The sensor 314 may be, for example, a pH sensor, a turbidity sensor, a dissolved oxygen sensor, a salinity sensor, an ammonia sensor, a chloride sensor, a nitrate sensor, a sulfite sensor, a total organic carbon sensor, a sensor for detecting any other element or ion, or any other selected sensor. In some embodiments, the sensor 306 may include an instrument capable of detecting multiple water quality properties, such as those available from Eureka Water Probes, of Austin, Texas, under the names Trimeter and Manta+.

When the product tank 110 is filling with the fresh water 308, the sensor 314 measures at least one water quality property (e.g., pH, turbidity, dissolved oxygen, salinity, ammonia concentration, chloride concentration, nitrate concentration, sulfite concentration, total organic carbon, concentration of another element or ion, *etc*.) of the fresh water 308. When the product tank 110 is mixing without filling, the sensor 314 measures the water quality property(ies) of the liquid in the product tank 110.

FIG. 3B is a simplified schematic view of the liquid distribution system 202 in a recirculation mode. As shown, the pump 302 provides liquid through the flow splitter 304 to the nozzles 204. The nozzles 204 may or may not be spraying liquid onto the field when the liquid distribution system 202 is in recirculation mode, depending on the pressure at each nozzle 204. That is, the nozzles 204 may spray liquid only when pressure at the nozzles 204 is above a threshold. In some embodiments, valves may control flow to individual nozzles 204. A recirculation line 316 can recycle liquid through check valves 318 and the valve 310 back to the product tank 110. The recirculation line 316 may be used to prime the liquid distribution system 202 to apply a new liquid, to clean out the liquid distribution system 202 after use, and/or to ensure consistent mixing throughout a liquid application process. Typically, when liquid is flowing through the recirculation line 316, the fresh water 308 (FIG. 3A) supply is disconnected, and the recirculating liquid passes the sensor 314, which measures the water quality property(ies) of the recirculating liquid in the liquid distribution system 202.

Whether the liquid is recirculating or simply mixing within the product tank 110, the sensor 314 can measure the water quality property(ies) of the liquid. This property can be reported to an operator of the crop sprayer 102, such as through a computer in the operator cab 106. The computer may also compare the current value of the water quality property to the value of the water quality property previously measured for the fresh water 308, and this information may be used by the operator to determine whether the liquid distribution system 202 is clean enough to switch to distributing a different material.

For example, after the crop sprayer 102 has been used to apply one material (*e.g*., an herbicide), and another material is to be applied next (*e.g*., a fungicide), the product tank 110 may be at least partially drained of the liquid therein. Removing all of the liquid from the product tank 110 is typically not feasible in operational settings, and therefore a rinse cycle is used to protect crops to be subsequently treated (which crops could be damaged by the material applied previously). Thus, fresh water 308 is provided to the product tank 110 and circulated within the product tank 110 to form a rinsate (i.e., a mixture of the fresh water 308 with the residual liquid from the prior spraying operation). As the fresh water 308 enters the product tank 110, the sensor 314 measures a water quality property of the fresh water 308.

After terminating the flow of the fresh water 308, the rinsate is circulated within the product tank 110 and/or through the recirculation line 316. After a period of time, the rinsate may have a substantially uniform concentration of the material previously applied (e.g., the herbicide). The sensor 314 may continually measure the water quality property, and the operator or a computer may use the information about the water quality property to determine when the rinsate is uniformly mixed. The operator or a computer may compare the water quality property of the rinsate with the previously measured water quality property of the fresh water 308 to determine whether the rinsate is sufficiently clean.

If the difference between the water quality property of the rinsate and the water quality property of the fresh water 308 is greater than a preselected threshold (i.e., the rinsate is not "clean" enough for the next operation), the rinsate is removed from the product tank, and additional fresh water 308 is provided to the product tank. The process can be repeated as many times as necessary until a desired difference between the rinsate and fresh water is observed. The rinsate (or second rinsate, third rinsate, etc.) is drained from the product tank 110, and the product tank 110 can be filled with the next liquid to be applied (e.g., the fungicide, and optionally including water to yield a preselected concentration), or the product tank 110 can be kept empty until its next use. The rinsate can be drained by spraying it out the nozzles 204, thus cleaning the nozzles 204 themselves. Alternatively, the rinsate may be withdrawn from the product tank 110 through a drain port, or may be flushed through a drain valve on the boom 112 or elsewhere in the liquid distribution system 202.

The quality of fresh water 308 can vary greatly depending on the source. However, because the water quality property of the fresh water 308 is measured while the product tank 110 is filling, variance in the water quality property can be easily accounted for in a cleaning procedure. In particular, the water quality property of the rinsate can be compared to the water quality property of the fresh water 308, rather than to a preselected standard. In other words, measurement of the water quality property of the fresh water 308 can serve as a calibration against which the rinsate can be compared. For example, if the sensor 314 measures chloride concentration, and the fresh water 308 has a chloride concentration of 12 mg/l, a chloride concentration in the rinsate of 25 mg/l would indicate that 13 mg/l is due to residual herbicide in the rinsate. If a standard of <5 mg/l of residual chlorine is desired, the operator would then drain the product tank 110 and rinse again with additional fresh water 308, and could repeat the process as many times as necessary to reach the standard.

The product tank and plumbing lines of conventional crop sprayers are typically flushed with fresh water and/or a cleaning solution (e.g., a surfactant) according to prescribed procedures or protocols. For example, an equipment or chemical manufacturer may recommend rinsing equipment once with a specified cleaning solution, and twice with fresh water, after applying a certain product. However, there is typically no way to know in the field whether any particular cleaning protocol has been effective without withdrawing and sending rinsate to a lab for analysis, which is not typically done because of time and expense.

Furthermore, differences in the properties of rinse water can affect how well the product tank and plumbing lines are cleaned. Therefore, having a way to measure water quality properties with the sensor 314 can help operators ensure that their equipment is clean, while avoiding excessive cleaning (which cleaning takes time and produces waste water).

In some embodiments, the crop sprayer 102 may not have a recirculation line 316. In such embodiments, the plumbing lines in the boom 112 may be cleaned by pumping the rinsate from the product tank 110 and out the nozzles 204, where it can be captured and disposed of. The sensor 314 in such embodiments can still measure the water quality property of the fresh water 308 and of the rinsate circulating through the mixing device 312 within the product tank 110.

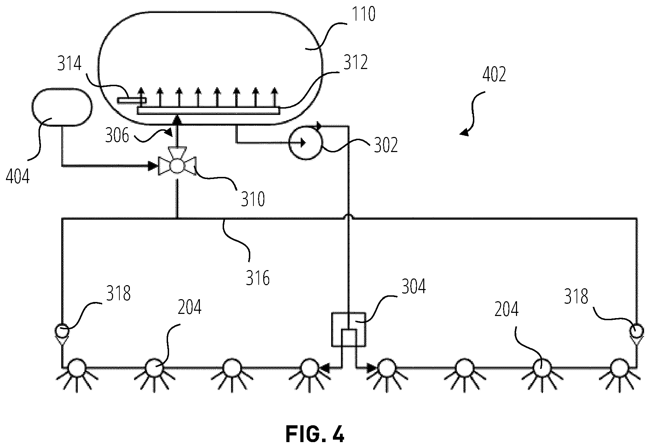

FIG. 4 is a simplified schematic view of another liquid distribution system 402, which is similar to the liquid distribution system 202 shown in FIG. 3A. The liquid distribution system 402 also includes a rinse tank 404 carried by the crop sprayer 102 and configured to contain a supply of rinse water (typically fresh water, but optionally including a cleaning agent). The valve 310 can direct the rinse water into the product tank 110 and past the sensor 314, which measures the water quality property(ies) of the rinse water in the same manner described above.

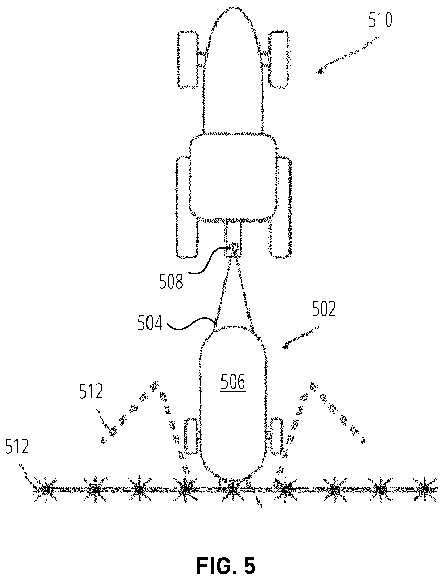

FIG. 5 shows another crop sprayer 502 that may be used to deliver chemicals to agricultural crops in a field. The crop sprayer 502 is a pull-type sprayer including a chassis 504 carrying a product tank 506. The crop sprayer 502 has a hitch 508 configured to couple the chassis 504 to a tractor 510. The tractor 510 may therefore pull the crop sprayer 502 through the field, and the operator of the tractor 510 may also operate the crop sprayer 502 via a control system in the cab of the tractor 510. The boom 112 may have arms that fold for road transport (partially folded boom arms indicated by dashed lines in FIG. 5). The crop sprayer 502 may also include a sensor 314 as shown in FIG. 3A and FIG. 3B and described above.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various vehicle types and configurations.

## Claims

1. A liquid distribution system for a crop sprayer, comprising:
a product tank configured to contain a liquid, the product tank having a fluid inlet;
a pump in fluid communication with the product tank;
a plurality of nozzles carried by a boom and configured to receive the liquid from the pump through at least one plumbing line;
at least one water quality sensor configured to detect a water quality property of liquid entering the product tank through the fluid inlet.

2. The liquid distribution system of claim 1, wherein the at least one water quality sensor is disposed within the product tank.

3. The liquid distribution system of claim 1 or 2, wherein the at least one water quality sensor is disposed to measure the water quality property of the liquid in the product tank.

4. The liquid distribution system of any one of claims 1 to 3, wherein the at least one water quality sensor comprises at least one sensor selected from the group consisting of a pH sensor, a turbidity sensor, a dissolved oxygen sensor, a salinity sensor, an ammonia sensor, a chlorine sensor, a nitrate sensor, a sulfite sensor, and a total organic carbon sensor.

5. The liquid distribution system of any one of claims 1 to 4, wherein the at least one water quality sensor is configured to report the water quality property to an operator of the crop sprayer.

6. The liquid distribution system of any one of claims 1 to 5, further comprising a rinse tank configured to contain rinse water separate from the liquid in the product tank, wherein the water quality sensor is configured measure the water quality property of the rinse water entering the product tank through the fluid inlet.

7. The liquid distribution system of any one of claims 1 to 6, further comprising a mixing device within the product tank.

8. The liquid distribution system of claim 7, wherein the sensor is configured to detect the water quality property of liquid passing through the mixing device.

9. A method of operating a crop sprayer, the method comprising:
providing fresh water to a product tank of the crop sprayer;
measuring a first water quality property of the fresh water entering the product tank;
circulating the fresh water within the product tank to form a rinsate;
measuring a second water quality property of the rinsate in the product tank;
comparing the second water quality property to the first water quality property;
removing the rinsate from the product tank; and
if a difference between the second water quality property and the first water quality property is greater than a preselected threshold, providing additional fresh water to the product tank to form a second rinsate.

10. The method of claim 9, further comprising draining the product tank before providing fresh water to the product tank.

11. The method of claim 9 or 10, wherein removing the rinsate from the product tank comprises spraying at least a portion of the rinsate through nozzles carried by a boom of the crop sprayer.

12. The method of any one of claims 9 to 11, wherein measuring the second water quality property of the rinsate in the product tank comprises measuring the second water quality property of the rinsate passing a sensor within the product tank.

13. The method of any one of claims 9 to 12, wherein measuring the first water quality property of the fresh water entering the product tank comprises measuring the first water quality property of the fresh water passing a sensor within the product tank.

14. The method of any one of claims 9 to 13, wherein measuring the first water quality property and measuring the second water quality property are each performed with a single sensor.

15. The method of any one of claims 9 to 14, wherein measuring the first water quality property and measuring the second water quality property each comprise measuring a water quality property selected from the group consisting of pH, turbidity, dissolved oxygen, salinity, ammonia concentration, chloride concentration, nitrate concentration, sulfite concentration, and total organic carbon.

16. The method of any one of claims 9 to 14, wherein measuring the first water quality property and measuring the second water quality property each comprise measuring a concentration of an element or an ion.
